(19) Europäisches Patentamt
European Patent Office
Office européen des brevets

(11) **EP 2 578 639 B1**

(12) **EUROPEAN PATENT SPECIFICATION**

(45) Date of publication and mention of the grant of the patent:
**07.08.2019 Bulletin 2019/32**

(51) Int Cl.:
**C08L 101/00** *(2006.01)* **C08L 27/12** *(2006.01)*
**C08L 33/04** *(2006.01)* **B32B 27/08** *(2006.01)*
**C08J 5/00** *(2006.01)* **B29B 9/10** *(2006.01)*

(21) Application number: **11786926.3**

(22) Date of filing: **26.05.2011**

(86) International application number:
**PCT/KR2011/003882**

(87) International publication number:
**WO 2011/149294 (01.12.2011 Gazette 2011/48)**

(54) **RESIN BLEND FOR MELT-PROCESSING, PELLET, METHOD FOR MANUFACTURING RESIN-MOLDED PRODUCT USING SAME AND RESIN-MOLDED PRODUCT**

HARZMISCHUNG ZUR SCHMELZVERARBEITUNG, VERFAHREN ZUR HERSTELLUNG EINES HARZFORMPRODUKTS DAMIT UND HARZFORMPRODUKT

MÉLANGE DE RÉSINE UTILISÉ POUR LE TRAITEMENT PAR FUSION, BOULETTE, PROCÉDÉ POUR PRODUIRE UN PRODUIT MOULÉ EN RÉSINE ET PRODUIT MOULÉ EN RÉSINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.05.2011 KR 20110050298**
**26.05.2011 KR 20110050289**
**14.10.2010 KR 20100100385**
**28.05.2010 KR 20100050639**

(43) Date of publication of application:
**10.04.2013 Bulletin 2013/15**

(73) Proprietor: **LG Chem, Ltd.**
**Seoul 07336 (KR)**

(72) Inventors:
• **RYU, Jin Young**
**Daejeon 302-120 (KR)**
• **KIM, Hak Shin**
**Daejeon 305-738 (KR)**
• **YOO, Houng Sik**
**Seoul 143-831 (KR)**
• **CHOI, Eun Joo**
**Daejeon 305-509 (KR)**
• **HONG, Young Jun**
**Daejeon 305-380 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**US-A1- 2003 198 769**

• **MING WEI ET AL.: 'Core-Sheath Structure in Electrospun Nanofibers from Polymer Blends' MACROMOLECULAR MATERIALS AND ENGINEERING vol. 291, no. ISS.11, 09 November 2006, pages 1307 - 1314**
• **N. ZHAO ET AL.: 'A Novel Ultra-hydrophobic Surface: Statically Non-wetting but Dynamically Non-sliding' ADVANCED FUNCTIONAL MATERIALS? vol. 17, no. ISSUE, October 2007, pages 2739 - 2745**
• **KEESTRA, BJ ET AL.: 'Two component injection molding of phase separating blends' INTERNATIONAL POLYMER PROCESSING vol. 21, no. 2, 2006, pages 168 - 174**
• **MATTHIAS SCHNELL ET AL.: 'Evolution of viscosities and morphology for the two-phase system polyethylene oxide/poly (dimethylsiloxane)' CHEMISTRY AND MATERIALS SCIENCE, RHEOLOGICA ACTA vol. 47, no. 4, 2008, pages 469 - 476**

**Description**

TECHNICAL FIELD

The present invention relates to the use of a resin blend for a melting process, and more particularly, to the use of a resin blend for a melting process which can improve mechanical and surface characteristics of a resin article, realize excellent contamination resistance and increase manufacturing efficiency, for example, reduction of a processing time, an increase in productivity and reduction of a manufacturing cost without using additional surface coating.

BACKGROUND

Resins are used for various applications such as a part of an automobile, a helmet, a part of an electric device, a part of a spinning machine, a toy or a pipe due to their excellent processability and properties such as tensile strength, modulus of elasticity, heat resistance and impact resistance.

Particularly, resins for home interior accessories, parts of automobiles and toys are required to be environment-friendly and have excellent scratch resistance because they are in direct contact with the human body. However, resins are generally decomposed by oxygen in the air, ozone and light and easily changed in color when exposed to an external environment over a certain period of time. Thus, the resins become very weak in weather resistance and strength, and are easily breakable. In addition, since a thermoplastic resin is easily contaminated by dust, water or oil, a method of coating and plating the thermoplastic resin using an anti-contamination coating agent or UV coating has been suggested to improve a surface characteristic of the plastic resin.

However, such a coating or plating process can degrade efficiency and economic feasibility of a manufacturing process of resins or generate toxic materials during the process or disposal of a resin product. In addition, a coated surface is detached and it is difficult to consistently exhibit physical properties

Accordingly, various methods have been suggested to improve characteristics such as scratch resistance or contamination resistance of a plastic resin without using the coating or plating process. For example, a method of adding an inorganic particle to resins has been suggested to improve physical properties such as wear resistance and hardness of resins. However, the method may deteriorate the processability of a resin and impact strength and brilliance characteristics. While a method of further adding a resin having excellent scratch resistance or contamination resistance to improve a surface characteristic of a plastic resin has also been suggested, according to this method, an additional process such as a curing process after injection of a product is needed, and the physical properties such as contamination resistance may not be improved to the extent required for the product.

For these reasons, there is a demand for a method of increasing efficiency and economic feasibility of a process and improving a mechanical characteristic and contamination resistance of an article without using a process of coating or plating a plastic resin.

US 2003/198769 A1 discloses a fluoropolymer comprising a blend of a substantially non-vinylidene fluoride containing partially fluorinated-thermoplastic and a perfluorothermoplastic and an article comprising a) a first layer comprising a blend of two or more fluoropolymers, which may be perfluorinated, and b) a second layer bonded to the first layer, the second comprising a partially-fluorinated thermoplastic polymer, a perfluorinated thermoplastic polymer, or a combination thereof, wherein the difference in surface energy is below about 3 mJ/$m^2$.

Macromolecular Materials and Engineering, vol. 291, no. ISS. 11, 1307-1314 discloses a resin blend comprising a first resin and a second resin, and it teaches that the first resin and the second resin have a fixed surface energy difference, and that the resin blend exhibits a layer separation phenomenon due to different physical properties.

Advanced Functional Materials, vol. 17, 2739-2745, discloses a PU resin blend with PMMA and a low surface energy fluorine-substituted hydrocarbon functional group, and it teaches that the resin blends exhibits a layer separation phenomenon.

International Polymer Processing, vol. 21, no. 2, 168-174, discloses a molded product manufactured by using a resin blend which exhibits a phase separation phenomenon.

Chemistry and Materials Science, Rheologica Acta, vol. 47, no. 4, 469-476 discloses a partially miscible polymer PMMA/SAN blend, which is used in two component injection molding to produce a sandwich structure with a heterogeneous skin layer.

SUMMARY OF THE INVENTION

The present invention provides use of a resin blend for forming a layer separation structure during a melting process under shear stress. The resin blend can improve mechanical and surface characteristics of a resin article and realize excellent contamination resistance. Further, since coating or plating is not required for manufacturing a resin article, a manufacturing time and/or manufacturing cost can be reduced, and productivity can be increased.

In one embodiment provided is the use of a resin blend, comprising: a first resin, wherein the first resin includes at least one selected from the group consisting of a styrene-based resin, a polyolefin-based resin, a thermoplastic elastomer, a polyoxyalkylene-based resin, a polyester-based resin, a polyvinyl chloride-based resin, a polycarbonate-based resin, a polyphenylene sulfide-based resin, a vinyl alcohol-based resin, an acrylate-based resin, and a copolymer thereof, and a second resin comprising a resin to which a fluorine or fluorine-substituted organic functional group is introduced and having a difference in surface energy from the first resin at 25°C of 0.1 to 35 mN/m, wherein the fluorine-substituted organic functional group comprises at least one selected from the group consisting of a fluorine-substituted alkyl group having 1 to 30 carbon atoms and a fluorine-substituted hydroxyalkyl group having 1 to 30 carbon atoms for forming a layer separation structure during a melting process under shear stress.

Further embodiments are disclosed in the dependent claims.

BRIEF DESCRIPTION OF THE DRAWINGS

FIG. 1 is a SEM image illustrating a cross-sectional view of a layer-separated resin article prepared according to Example 2.

FIG. 2 is a SEM image illustrating a cross-sectional view of a resin article treated with a solution capable of selectively dissolving a second resin, when viewed at a 45-degree angle from the surface.

DETAILED DESCRIPTION OF EXEMPLARY EMBODIMENTS

Hereinafter, a resin blend for a melting process, a pellet, a method of preparing a resin article using the same and a resin article will be described in detail.

A blend may be one in which a first resin and a second resin are uniformly blended in one matrix, or one in which a pellet composed of a first resin and a pellet composed of a second resin are uniformly blended. The one in which the resins are uniformly blended in one matrix indicates that first and second resins are uniformly blended in one pellet, and thus are present in a type of a composition.

A melting process or melt processing may indicate a process of melting a resin blend at a melting temperature (Tm) of the resin blend or higher to form a melt blend and forming a desired product by using the melt blend. For example, the melting process may include injection, extrusion, fiber spinning, foaming and the like.

A layer separation or layer-separated may indicate that one layer substantially formed of one resin is disposed or aligned on another layer substantially formed of another resin. The layer substantially formed of one resin may indicate that one type of resin is continuously present in the entire layer, without forming a sea-island structure in the layer. The sea-island structure may indicate a phase-separated resin is partially distributed in an entire resin blend. Further, the "substantially formed" may indicate that one resin is present or one resin is rich in a layer. In the layer separation, two layers may be separated, or when necessary, three or more layers may be separated.

The inventors found that layer separation may be observed in a resin blend for a melting process including a first resin and a second resin having contamination resistance when a first resin and a second resin having different physical properties are used, and a surface of a pellet or resin article is selectively coated using the layer separation without using an additional process during or after an extrusion or injection process, and thus completed the present invention.

Particularly, since the second resin has a different physical property, such as a higher hydrophobicity, compared to the first resin, the layer separation may be easily performed in a melting process such as extrusion or injection, and the second resin may be easily transferred to a surface in contact with a ambient air. Accordingly, when the resin blend for a melting process is used, a surface layer of the pellet or resin article may be formed of the second resin without using an additional coating process. Thus, problems caused by the coating or plating process, for example, increases in manufacturing time and cost, and treatment of a coating agent used to improve a hardness or antifouling property, may be solved, and the surface characteristic and contamination resistance of the prepared pellet or resin article may be improved.

The layer separation of the resin blend may be caused by a difference in physical properties between a first and second resins and/or a molecular weight distribution of the second resin. Here, the different physical properties may, for example, include surface energy, melt viscosity and a solubility parameter.

The difference in surface energy between the first and second resins at 25 °C may be preferably 1 to 30 mN/m, and more preferably 1 to 20 mN/m. In the resin blend, after melting-process, the melt-processed the resin blend is exposed to an ambient air. At this time, the resin blend has mobility. Thus, the second resin may be positioned adjacent to the ambient air to form a surface layer of the resin article because the second resin having a smaller surface energy compared to the first resin may have a hydrophobic property, and move to contact with the ambient air. Accordingly, when the difference in surface energy is very small, the layer separation of the melt-processed resin blend does not easily occur because the second resin in a mixture of melting state is difficult to move through the polymer matrix of resin blend. Also, when the difference in surface energy is very large, the first and second resins may not be attached to each other, and thus may be detached.

In addition, a difference in a melt viscosity between the first resin and the second resin may be 0.1 to 3000 pa*s, preferably 1 to 2000 pa*s, more preferably 1 to 1000 pa*s at a shear rate of 100 to 1000 s$^{-1}$ and a processing temperature of the resin blend. When the difference in the melt viscosity is very small, the layer separation of the resin blend does not easily occur because the first resin is easily mixed with the second resin. When the difference in the melt viscosity is very large, the first and second resins may not be attached to each other, and thus may be detached.

The melt viscosity may be measured using a capillary flow meter, and indicates a shear viscosity (pa*s) at a predetermined processing temperature and shear rate (/s).

The shear rate is a shear rate applied when the resin blend is processed, and may be controlled according to a processing method.

The processing temperature is a temperature at which the resin blend is processed. For example, when the resin blend is subject to a process such as extrusion or injection, the processing temperature is a temperature at which the extrusion or injection is performed. The processing temperature may be controlled according to a resin subjected to extrusion or injection. For example, a processing temperature for a resin blend including a first resin composed of an ABS resin and a second resin obtained by polymerizing a methyl methacrylate-based monomer may be 210 to 240 °C.

In addition a difference in a solubility parameter between the first resin and the second resin at 25 °C may be 0.001 to 10.0 (J/cm$^3$)$^{1/2}$, preferably 0.01 to 5.0 (J/cm$^3$)$^{1/2}$, and more preferably 0.01 to 3.0 (J/cm$^3$)$^{1/2}$. A solubility parameter is an inherent characteristic of a resin showing soluble ability according to a polarity of each resin molecule, and the solubility parameter for each resin is generally known. When the difference in the solubility parameter is very small, the layer separation of the resin blend does not easily occur because the first resin is easily mixed with the second resin. When the difference in the solubility parameter is very large, the first and second resins may not be attached to each other, and thus may be detached.

A molecular weight distribution (PDI) of the second resin is 1 to 2.5, and preferably 1 to 2.3.

When the molecular weight distribution of the second resin is greater than 2.5, the first resin is easily mixed with the second resin due to the low molecular weight portion of the second resin, or the mobility of the second resin in a mixture of melting state is degraded due to the high molecular weight portion thereof, the layer separation is hardly occurred.

In the present invention, the weight average molecular weight (Mw) of the second resin of the resin blend for a melting process is 30,000 to 200,000, and preferably 50,000 to 150,000.

When the weight average molecular weight is smaller than 30,000, the first resin is easily mixed with the second resin, and when the weight average molecular weight is greater than 200,000, the mobility of the second resin is degraded and thus the layer separation is hardly occurred.

The second resin shows the difference in physical properties from the first resin as described above, and may provide certain functions, for example, improved surface hardness and an anti-contamination characteristic, to a surface of the desired resin article.

The second resin includes a resin to which a fluorine or fluorine-substituted organic functional group is introduced. When the fluorine or fluorine-substituted organic functional group is introduced, the surface energy or melt viscosity of the second resin is decreased. As a result, the second resin in a mixture of melting state may more easily move to contact with an ambient air, and the above-described layer separation in the process such as extrusion or injection may more easily occur. As the surface energy of the second resin is decreased due to the fluorine or fluorine-substituted organic functional group, the surface of the resin article may have a lower adhesive strength with respect to an organic or inorganic material, thereby realizing excellent contamination resistance.

As the fluorine-substituted organic functional group, a fluorine-substituted alkyl group having 1 to 30 carbon atoms; or a fluorine-substituted hydroxyalkyl group having 1 to 30 carbon atoms are included, and at least one or two thereof may be introduced to the resin.

More specifically, the fluorine-substituted organic functional group may include an alkyl group having 1 to 30 carbon atoms with which at least three fluorine atoms are substituted, or an alkyl or hydroxyalkyl group having 1 to 10 carbon atoms including a perfluoroalkyl group having 1 to 10 carbon atoms.

Examples of the fluorine-substituted organic functional groups may include a trifluoromethyl group, a trifluoroethyl group, a trifluoropropyl group, a perfluorohexyl ethyl group, a pentafluoropropyl group, a perfluorobutyl ethyl group, a perfluorobutyl hydroxypropyl group, a perfluorohexyl hydroxypropyl group, a perfluoromethylbutyl hydroxypropyl group, a perfluorodecyl ethyl group, a tetrafluoropropyl group, an octafluoropentyl group, a dodecafluoroheptyl group and a hexafluorobutyl group. Examples of the resin which may be included in the second resin may include a (meth)acrylate-based resin, an epoxy-based resin, an oxetane-based resin, an isocyanate-based resin, a silicon-based rein, and a copolymer or mixture thereof.

The (meth)acrylate-based resin is a resin formed by polymerizing an acryl or methacryl monomer as a main component, which may include, but is not limited to, alkyl methacrylates such as methyl methacrylate, ethyl methacrylate, propyl methacrylate, butyl methacrylate, cyclohexyl methacrylate, octyl methacrylate, lauryl methacrylate or stearyl methacrylate; alkyl acrylates such as methyl acrylate, ethyl acrylate, propyl acrylate, butyl acrylate, octyl acrylate, lauryl acrylate or stearyl acrylate; or glycidyl (meth)acrylates such as glycidyl methacrylate or glycidyl acrylate.

The epoxy-based resin is a resin containing an epoxy group, and may be, but is not limited to, a bisphenol type such as bisphenol A, bisphenol F, bisphenol S or a hydro additive thereof; a novolac type such as phenol novolac or cresol novolac; a nitrogen-containing ring type such as triglycidyl isocyanurate or hydantoin; an alicyclic type; an aliphatic type; an aromatic type such as naphthalene or biphenyl; a glycidyl type such as glycidyl ether, glycidyl amine or glycidyl ester; a dicyclo type such as dicyclopentadiene; an ester type; or an ether ester type.

The oxetane-based resin is a resin formed by polymerizing an oxetane monomer having at least one oxetane ring, and may be, but is not limited to, 1,4-bis[(3-ethyl-3 -oxetanylmethoxy)methyl] benzene, di [1-ethyl(3 -oxetanyl)] methylether, or a polyoxetane compound such as phenol novolac oxetane, terephthalate bisoxetane or biphenylene bisoxetane.

The isocyanate-based resin is a resin containing an isocyanate group, and may be, but is not limited to, diphenylmethane diisocyanate (MDI), toluene diisocyanate (TDI) or isophorone diisocyanate (IPDI).

The silicon-based resin is a resin containing a main chain connected by a siloxane bond which is a silicon-oxygen bond, and may be, but is not limited to, polydimethylsiloxane (PDMS).

The resin blend for a melting process may include the second resin in an amount of 0.1 to 50 parts by weight, and preferably 1 to 20 parts by weight, based on 100 parts by weight of the first resin.

When the second resin is included in an amount smaller than 0.1 parts by weight based on 100 parts by weight of the first resin, the layer separation does not occur, and when the second resin is included in an amount larger than 50 parts by weight, the manufacturing cost is increased.

The second resin may have either or all of a thermal curable functional group and UV curable functional group without specific limitation. When a thermal curable functional group is included in the second resin, hardness may be increased due to the crosslinks formed in melting process. Accordingly, the second resin may have a higher surface hardness than that after thermal crosslinking in the extrusion or injection.

Meanwhile, the first resin mainly determines the physical properties of a desired resin article and may be selected according to a kind of the desired resin article and process conditions. The first resin is a styrene-based resin such as an acrylonitrile butadiene styrene (ABS)-based resin, a polystyrene-based resin, an acrylonitrile styrene acrylate (ASA)-based resin or a styrene-butadiene-styrene block copolymer-based resin; a polyolefin-based resin such as a high density polyethylene-based resin, a low density polyethylene-based resin or a polypropylene-based resin; a thermoplastic elastomer such as an ester-based thermoplastic elastomer or olefin-based thermoplastic elastomer; a polyoxyalkylene-based resin such as a polyoxymethylene-based resin or a polyoxyethylene-based resin; a polyester-based resin such as a polyethylene terephthalate-based resin or a polybutylene terephthalate-based resin; a polyvinylchloride-based resin; a polycarbonate-based resin; a polyphenylenesulfide-based resin; a vinyl alcohol-based resin; a polyamide-based resin; an acrylate-based resin; an engineering plastic; or a copolymer or mixture thereof.

Meanwhile, the resin blend for a melting process may show the difference in physical properties from the first resin described above, and further include a specific resin capable of providing a certain function to the surface of the desired resin article, for example, an anti-wear resin, an anti-contamination resin, an anti-fingerprint resin, a colored resin, a pearl resin, a high-gloss resin, a non-gloss resin, a barrier resin or a mixture thereof.

The resin blend for a melting process may be prepared into a pellet by a melting process such as extrusion. The pellet prepared using the resin blend may have a structure in which a first resin may be disposed in the middle thereof, and a second resin may be layer-separated from the first resin and disposed to surround the first resin and to form a shell of the pellet.

A pellet which includes a core including a first resin and a shell including a second resin including a resin to which a fluorine or fluorine-substituted organic functional group is introduced and having a difference in surface energy from the first resin at 25 °C of 0.1 to 35 mN/m may be provided.

The molecular weight distribution, weight average molecular weights and different physical properties of the first and second resins have already been described above, and thus detailed description thereof will be omitted.

Meanwhile, a method of preparing a resin article including melting the resin blend for a melting process to form a melt blend; and processing the melt blend may be provided.

As described above, since the second resin has a different physical property, such as a higher hydrophobicity, compared to the first resin, the layer separation may occur during the extrusion or injection of the resin blend, and due to the layer separation, a surface of a pellet or resin article may be selectively coated without an additional process.

Particularly, the second resin includes a resin to which a fluorine or fluorine-substituted organic functional group is introduced, and the fluorine or fluorine-substituted organic functional group can reduce a surface energy or melt viscosity of the second resin, thereby having high hydrophobicity during the melting process such as extrusion or injection.

Accordingly, the second resin in a mixture of melting state may more easily move to contact with an ambient air and a resin article having improved mechanical and surface characteristics may be provided since the second resin is disposed on a surface of the resin article. In addition, since the fluorine or fluorine-substituted organic functional group may reduce the surface energy of the second resin, the surface of the resin article may have a lower adhesive strength with respect to an organic or inorganic material, and have excellent contamination resistance.

Furthermore, the melting process is performed under a shear stress, and may include, but is not limited to, injection and extrusion.

The resin blend for a melting process may be prepared into a pellet by an extrusion. In addition, the resin blend may be prepared into a pellet by extrusion, and then processed into a resin article through a melting process such as injection. Alternatively, the resin blend may be directly prepared into a resin article by injection.

According to kinds of the first and second resins used in the extrusion or injection of the resin blend, a temperature to be applied may be changed.

The method of preparing a resin article may further include curing a resulting product obtained by melting-processing the resin blend, that is, a melting-processed product obtained from the resin blend. After the process such as extrusion or injection, either or both of thermal curing and ultraviolet (UV) curing may be further performed. When necessary, chemical treatment may be performed after the process.

Meanwhile, the method of preparing a resin article may further include preparing a second resin before the melting process of the resin blend for a melting process. As examples for the preparation of the second resin, there is bulk polymerization, solution polymerization, suspension polymerization, or emulsion polymerization.

In the suspension polymerization method, the second resin may be prepared by dispersing a monomer in a reaction medium, adding and blending an additive such as a chain transfer agent, an initiator and a dispersion stabilizer in the reaction solvent and polymerizing the blend at 40°C or higher. The monomer is a monomer of at least one resin selected from the group consisting of an anti-wear resin, an anti-contamination resin, an anti-fingerprint resin, a colored resin, a pearl resin, a high-gloss resin, a non-gloss resin and a barrier resin.

Examples of the monomer of at least one resin selected from the group consisting of the anti-wear resin, the anti-contamination resin, the anti-fingerprint resin, the colored resin, the pearl resin, the high-gloss resin, the non-gloss resin and the barrier resin may include a (meth)acrylate-based resin, an epoxy-based resin, an oxetane-based resin, an isocyanate-based resin, a silicon-based resin, or a copolymer thereof.

The reaction medium may be any medium known to be conventionally used to prepare a synthetic resin, polymer or copolymer without limitation. An example of the reaction medium may be distilled water.

The chain transfer agent which can be added to the reaction solvent may be, but is not limited to, an alkyl mercaptan such as n-butyl mercaptan, n-dodecyl mercaptan, tertiary dodecyl mercaptan or isopropyl mercaptan; aryl mercaptan; a halogen compound such as ketone tetrachloride; or an aromatic compound such as an alpha-methylstyrene dimer or an alpha-ethylstyrene dimer.

The initiator is a polymerization initiator, which may be, but is not limited to, a peroxide such as octanoyl peroxide, decanoyl peroxide or lauryl peroxide, or an azo-based compound such as azobisisobutyronitrile or azobis-(2,4-dimethyl)-valeronitrile.

The dispersion stabilizer which can be included in the reaction medium may be, but is not limited to, an organic distribution agent such as polyvinyl alcohol, polyolefin-maleic acid or cellulose or an inorganic distribution agent such as tricalcium phosphate.

The first and second resins have already been described above in detail, and thus further description thereof will be omitted.

Meanwhile, a melting-processed resin article which includes a first resin layer; a second resin layer formed on the first resin layer; and an interface layer formed between the first resin layer and the second resin layer is provided. Here, the interface layer includes a first resin and a second resin. Also, the second resin layer includes a resin to which a fluorine or fluorine-substituted organic functional group is introduced. The resin article prepared from the resin blend including specific first and second resins may include a layer-separated structure in which a first resin layer is disposed inside and a second resin layer is formed on a periphery thereof.

The layer separation occurring in the melting-processed resin article is caused by preparing a melting-processed resin article by applying the molecular weight distribution (PDI) and weight average molecular weight (Mw) of the second resin, and different physical properties of specific first and second resins, which are described above. Examples of the different physical properties may include surface energy, melt viscosity or a solubility parameter.

Since the resin article can have improved mechanical and surface characteristics, a coating or painting process to improve heat resistance or scratch resistance may be omitted, production time and a production cost may be reduced, and productivity of a final product may be increased.

Particularly, the second resin includes the fluorine or fluorine-substituted organic functional group, and due to the organic functional group, the surface energy of the resin article may be decreased and may thus have a low adhesive strength and excellent contamination resistance with respect to an organic or inorganic material.

The resin article has a novel structure which has not been known in the art. The resin article is formed in such a structure that the first resin layer is separated from the second resin layer by an interface layer and the second resin layer is exposed to an ambient air. This structure may not be formed by extrusion and injection process of a general resin, and thus it is difficult to realize the effects according to the structure.

The first resin layer may indicate a part substantially including the first resin and disposed in the resin article due to low hydrophobicity. The second resin layer may indicate a part substantially including the second resin and disposed on the surface of the resin article due to high hydrophobicity and thus providing an improved surface hardness or excellent anti-contamination characteristic to the surface of the resin article.

Meanwhile, the resin article may include an interface layer including a blend of a first resin and a second resin and formed between the first resin layer and the second resin layer. The interface layer may serve as a boundary formed between the layer-separated first and second resin layers, and include the blend of the first and second resins. The blend may be present in such a manner that the first resin is physically or chemically bound to the second resin, and the first resin layer may be bound to the second resin layer by the blend.

As described above, the resin article may have such a structure that the first resin layer is separated from the second resin layer by the interface layer, and the second resin layer is exposed to an ambient air. For example, the resin article may have a structure in which the first resin layer, an interface layer and a second resin layer are sequentially stacked, or a structure in which the first resin layer is disposed, and the interface layers and the second resin layer are disposed above and below the first resin layer. Alternatively, the resin article may have such a structure that the first resin layer formed in various three-dimensional shapes, for example, spherical, circular, polyhedral and sheet-type shapes, is sequentially surrounded by the interface and the second resin layer.

Meanwhile, the first resin layer, the second resin layer and the interface layer may be observed using a scanning electron microscope (SEM) after a sample goes through a low temperature impact test and a cross-section of the sample is etched using a THF vapor. To observe the first and second resin layers and the interface layer and measure a thickness of each layer, a sample was cut with a diamond knife using a microtoming device to obtain a smooth cross-section, and the smooth cross-section was etched using a solution capable of more selectively dissolving a second resin than a first resin. The etched cross-section is dissolved to different levels of depth according to contents of the first and second resins, and when the cross-section is viewed at a 45-degree angle from a surface thereof through SEM, the first resin layer, the second resin layer and the interface layer may be observed due to a shade difference and thicknesses thereof may be measured. In the present invention, as the solution more selectively dissolving the second resin, a 1,2-dichloroethane solution (10 volume%, in EtOH) is used, but is merely an example. Therefore, any solution having a higher solubility of the second resin than the first resin may be used without limitation, and the solution may vary according to the kind and composition of the second resin.

The thickness of the interface layer may be 0.01 to 95%, and preferably 0.1 to 70%, of the total thickness of the second resin layer and the interface layer. When the thickness of the interface layer is 0.01 to 95% to the total thickness of the second resin layer and the interface layer, the interface adhesive strength of the first and second resin layers is excellent. Thus, the first and the second resin layers are not detached, and the surface characteristic caused by the second resin layer may be considerably improved. On the other hand, when the thickness of the interface layer is too smaller than the total thickness of the second resin layer and the interface layer, the adhesive strength between the first and second resin layers is decreased, and thus both layers may be detached. However, when the thickness of the interface layer is very thick, the improvement in a surface characteristic of the second resin layer may be insignificant.

The second resin layer may have a thickness of 0.01 to 60%, preferably 0.1 to 40%, and more preferably 1 to 20%, of the total thickness of the resin article. As the second resin layer has a thickness in a predetermined range, predetermined functions may be provided to the surface of the resin article. Here, when the second resin layer has a very thin thickness, it may be difficult to sufficiently improve the surface characteristic of the resin article, and when the second resin layer has a very thick thickness, the mechanical property of the second resin may be reflected to the resin article, and thus the mechanical property of the first resin may be changed.

The first and second resins and fluorine-substituted organic functional group have already been described above in detail, and thus further description thereof will be omitted.

Meanwhile, a melting-processed resin article which includes a first resin layer and a second resin layer formed on the first resin layer may be provided. Here, components of the first resin layer are detected from a surface of the second resin layer by an infrared (IR) spectrometer, and the second resin layer includes a resin to which a fluorine or fluorine-substituted organic functional group is introduced.

A structure of the resin article, that is, a structure in which the component of the first resin layer is detected from the surface of the second resin layer by the IR spectrometer, is novel, and has not been known in the art. Generally, in a coating process, the component of the first resin layer is difficult to detect from the surface of the second resin layer.

The surface of the second resin layer indicates a surface exposed to the ambient air, not to the first resin layer.

In addition, the component of the first resin layer indicates at least one of the components included in the first resin layer.

The first and second resins and the resin to which the fluorine-substituted organic functional group is introduced have already been described above in detail, and thus further description thereof will be omitted.

A part of an automobile, a helmet, a part of an electric device, a part of a spinning machine, a toy, or a pipe including the melting-processed resin article may be provided.

The present invention will be described with reference to the following Examples in detail. However, the present invention is not limited to the following Examples.

**Experimental Example 1: Measurement of Surface Energy**

According to the Owens-Wendt-Rabel-Kaelble (OWRK) method, surface energies of first resin and second resins obtained from Examples and Comparative Examples were measured using a drop shape analyzer (Kruss, DSA100).

More specifically, the first resin or the second resin was dissolved in a methyl ethyl ketone solvent to have a concentration of 15 wt%, and then coated on an LCD glass by bar coating. The coated LCD glass was pre-dried in an oven at 60 °C for 2 minutes and then dried at 90 °C for 1 minute.

After drying (or curing), deionized water and diiodomethane were dropped 10 times on the coated surface at 25 °C, respectively, to get an average value of a contact angle, and surface energy was calculated by substituting a numerical value into the OWRK method.

**Experimental Example 2: Measurement of Melt Viscosity**

Melt viscosities of the first resin and the second resins obtained from Examples and Comparative Examples were measured using a capillary rheometer 1501 (Gottfert).

More specifically, after a capillary die was attached to a barrel, the first resin or the second resin was put into the barrel by dividing to 3 parts. A shear viscosity (pa*s) according to a shear rate of 100 to 1000 $s^{-1}$ was measured at a processing temperature of 240 °C.

**Experimental Example 3: Measurement of Solubility Parameter**

While there are some methods of measuring and calculating a solubility parameter, in the following Examples and Comparative Examples, the solubility parameter was calculated at 25 °C using a known method, the Van Krevelen method [refer to Bicerano, J., Prediction of Polymer Properties, third edition, Marcel Dekker Inc., New York (2002), the disclosure of which is incorporated herein by reference in its entirety]. According to the Van Krevelen method, the solubility parameter was calculated using a group contribution theory, and defined as the following formula:

$$\delta \text{ (solubility parameter)} = \sqrt{e_{coh}} = \sqrt{\frac{E_{coh}}{V}}$$

In the formula, $E_{coh}$ is a cohesive energy, V is a molar volume, and $e_{coh}$ is a cohesive energy density. The cohesive energy ($E_{coh}$) is defined as follows:

$$E_{coh} = 10570.9 \times (^0\chi' - ^0\chi) + 9072.8 \times (2x^1\chi - ^1\chi') + 1018.2 \times N_{VKH}$$

In the formula, $^0X$, $^1X$, $^0X^v$ and $^1X^v$ are connectivity indices, and $N_{VKH}$ is a correlation term. Each variant was calculated with reference to the disclosed literature [Bicerano, J., Prediction of Polymer Properties, third edition, Marcel Dekker Inc., New York (2002)].

**Experimental Example 4: Observation of Feature of Cross-section**

The samples prepared in Examples and Comparative Examples went through a low temperature impact test. Then, fracture surfaces of the samples were etched using THF vapor, and a layer-separated cross-section was observed using an SEM.

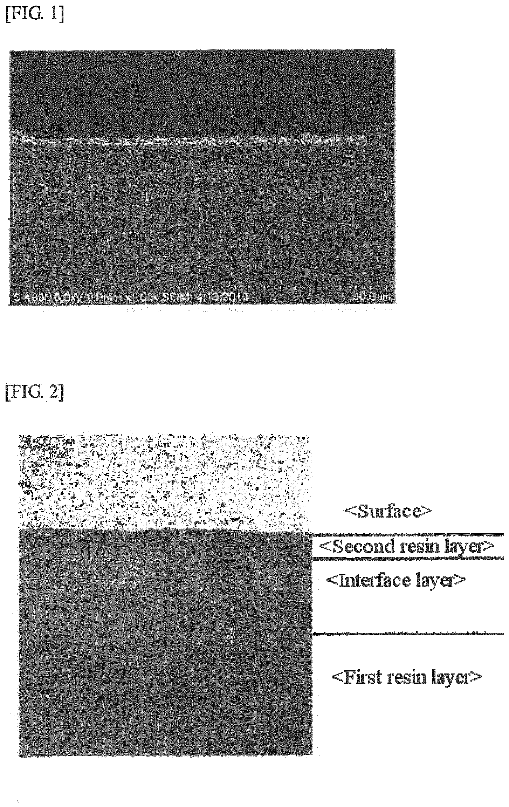

Meanwhile, to measure thicknesses of layer-separated first and second resin layers and an interface layer, the samples of the following Examples and Comparative Examples were cut with a diamond knife at -120 °C using a microtoming device (Leica EM FC6), thereby obtaining a smooth cross-section. The part of the sample with the microtomed smooth cross-section was dipped in a 1,2-dichloroethane solution (10 volume%, in EtOH) to etch for 10 seconds, and then washed with distilled water. The etched cross-sectional part was dissolved to different levels of depth according to the contents of the first and second resins, and could be observed using an SEM. That is, when the cross-section was viewed at a 45-degree angle from a surface, due to a shade difference, the first resin layer, the second resin layer and the interface layer could be observed, and a thickness of each layer could be measured. The feature of the cross-section observed at a 45-degree angle from the surface is shown in FIG. 2.

**Experimental Example 5: Experiment for Measuring Pencil Hardness**

Pencil hardnesses of the samples in Examples and Comparative Examples were measured under a constant load of 500 g using a pencil hardness tester (Chungbuk Tech). Scratches were made on a surface of the samples by standard pencils (Mitsubishi; grade 6B to 9H) with a fixed angle of 45 degrees, and therefore a change rate of the surface was observed (ASTM 3363). The values of pencil hardness are average values of the results obtained from tests performed 5 times.

**Experimental Example 6: Measurement of Molecular Weight Distribution (PDI)**

Molecular weight distribution was measured using gel permeation chromatography (GPC) under conditions as follows:

Instrument: 1200 series produced by Agilent Technologies
Column: 2 PLgel mixed Bs produced by Polymer Laboratories
Solvent: THF
Column Temperature: 40 °C
Concentration of Sample: 1 mg/mL, 100 L injection
Standard: Polystyrene (Mp: 3900000, 723000, 316500, 52200, 31400, 7200, 3940 or 485)

As an analysis program, ChemStataion provided by Agilent Technologies was used, and a weight average molecular weight (Mw) and a number average molecular weight (Mn) were measured using gel permeation chromatography (GPC), and the molecular weight distribution was then calculated from an equation of Mw/Mn.

**Experimental Example 7: Test for Measuring Contamination Resistance**

Contamination Resistance of the samples obtained in Examples and Comparative Examples was measured. Specifically, the sample was dissolved to 15 wt% in a methyl ethyl ketone solvent, and coated on an LCD glass by bar coating. Subsequently, the coated LCD glass was pre-dried in an oven at 60 °C for 2 minutes, and dried in an oven at 90 °C for 1 minute.

Subsequently, after writing on a surface of the dried sample with a pen (Name Pen, Monami), two lines having a length of approximately 5 cm were drawn and wiped out with a superfine fiber unwoven fabric to observe a mark of the pen with the naked eye. When the mark of the pen was completely removed, the above-described procedure was repeated and continued until the mark of the pen was not removed. A total number of the repeated procedures was recorded.

**Experimental Example 8: Surface Analysis by IR Spectrometer**

The experiment was performed using a UMA-600 IR microscope equipped with a Varian FTS-7000 spectrometer (Varian, USA) and a mercury cadmium telluride (MCT) detector, and detection of spectra and data processing were performed using Win-IR PRO 3.4 software (Varian, USA). Conditions of the experiment were as follows:

- Germanium (Ge) ATR crystal having refractive index of 4.0
- Spectral Resolution of Middle Infrared Spectrum obtained by Attenuated Total Reflection: 8 $cm^{-1}$ and Range of 16 Scans: 4000 $cm^{-1}$-600$cm^{-1}$,
- Internal Reference Band: Carbonyl Group (C=O str., ~1725 $cm^{-1}$) of Acrylate
- Original Component of First Resin: Butadiene Compound [C=C str. (~1630 $cm^{-1}$) or =C-H out-of-plane vib. (~970 $cm^{-1}$)]

Peak intensity ratios [$I_{BD}$(C=C)/$I_A$(C=O)] and [$I_{BD}$(out-of-plane)/$I_A$(C=O)] were calculated, and the detection of spectra was performed 5 times in different regions of one sample, and an average value and a standard deviation were calculated.

**Example 1**

(1) Preparation of Second Resin

1500 g of distilled water and 4 g of 2% polyvinylalcohol aqueous solution as a dispersing agent were put into a 3-liter reactor and dissolved. Subsequently, 760 g of methyl methacrylate, 40 g of perfluorohexylethyl methacrylate, 2.4 g of n-dodecyl mercaptan as a chain transfer agent and 2.4 g of azobis-(2,4-dimethyl)-valeronitrile as an initiator were further added thereto, and mixed while stirring at 400 rpm. The mixture was polymerized by 3-hour reaction at 60 °C, and cooled to 30 °C, thereby obtaining a bead-type second resin. Afterward, the second resin was washed three times with distilled water, dehydrated and dried in an oven.

(2) Preparation of Resin Blend and Resin Article Using the Same

After 90 parts by weight of a first resin (a thermoplastic resin composed of 60 wt% methyl methacrylate, 7 wt% acrylonitrile, 10 wt% butadiene and 23 wt% styrene) was blended with 10 parts by weight of the second resin, the blend was extruded using a twin-screw extruder (Leistritz) at 240 °C, thereby obtaining a pellet. Then, the pellet was injected using an EC100Φ30 injector (ENGEL) at 240 °C, thereby obtaining a sample 1 having a thickness of 3200 $\mu$m.

(3) Measurement of Physical Properties of Sample

As the results of measurement of the physical properties of the obtained sample, it was shown that a thickness of the second resin layer was 102 $\mu$m, a thickness of an interface layer was 15 $\mu$m, a difference in surface energy was 5.4 mN/m, a difference in melt viscosity was 250 pa*s, a difference in solubility parameter was 0.2 $(J/cm^3)^{1/2}$, a weight average molecular weight of the second resin obtained by GPC was 100K, and a molecular weight distribution thereof was 2. In addition, an angle of contact was 75 degrees, a pencil hardness was 2H, and layer separation occurred. In evaluation of contamination resistance, a number of repetitions of the test performed until a mark was no longer removed was 40.

The peak intensity ratio $[I_{BD}(C=C)/I_A(C=O)]$ measured by an IR spectrometer had an average of 0.0113 with a standard deviation of 0.0002, and the peak intensity ratio $[I_{BD}(\text{out-of-plane})/I_A(C=O)]$ had an average of 0.398 with a standard deviation of 0.0021.

**Example 2**

(1) Preparation of Second Resin

A second resin was obtained by the same method as described in Example 1, except that 552 g of methyl methacrylate, 240 g of 3-ethyl-3-methacryloyloxymethyloxetane and 8 g of perfluorohexylethyl methacrylate were used instead of 760 g of methyl methacrylate and 40 g of perfluorohexylethyl methacrylate.

(2) Preparation of Resin Blend and Molded Article Using the Same

10 parts by weight of the second resin obtained above was blended with 90 parts by weight of the first resin, and then a sample having a thickness of 3200 $\mu$m was prepared by the same method as described in Example 1.

(3) Measurement of Physical Properties of Sample

As the results of measurement of the physical properties of the obtained sample, it was shown that a thickness of the second resin layer was 14 $\mu$m, a thickness of an interface layer was 13 $\mu$m, a difference in surface energy was 11.9 mN/m, a difference in melt viscosity was 280 pa*s, a difference in solubility parameter was 0.5 $(J/cm^3)^{1/2}$, a weight average molecular weight of the second resin obtained by GPC was 100K, and a molecular weight distribution thereof was 2.1. In addition, an angle of contact was 82 degrees, a pencil hardness was 2H, and layer separation occurred. In evaluation of contamination resistance, a number of repetitions of the test performed until a mark was no longer removed was 21.

### Example 3

(1) Preparation of Second Resin

A second resin was obtained by the same method as described in Example 1, except that 760 g of methyl methacrylate and 40 g of perfluorodecyl methacrylate were used instead of 760 g of methyl methacrylate and 40 g of perfluorohexylethyl methacrylate.

(2) Preparation of Resin Blend and Molded Article Using the Same

10 parts by weight of the second resin obtained above was blended with 90 parts by weight of the first resin, and then a sample having a thickness of 3200 $\mu$m was prepared by the same method as described in Example 1.

(3) Measurement of Physical Properties of Sample

As the results of measurement of the physical properties of the obtained sample, it was shown that a thickness of the second resin layer was 50 $\mu$m, a thickness of an interface layer was 21 $\mu$m, a difference in surface energy was 7.3 mN/m, a difference in melt viscosity was 260 pa*s, a difference in solubility parameter was 0.2 $(J/cm^3)^{1/2}$, a weight average molecular weight of the second resin obtained by GPC was 100K, and a molecular weight distribution thereof was 2. In addition, an angle of contact was 83 degrees, a pencil hardness was 1.5H, and layer separation occurred. In evaluation of contamination resistance, a number of repetitions of the test performed until a mark was no longer removed was 15.

### Example 4

(1) Preparation of Second Resin

A second resin was obtained by the same method as described in Example 1, except that 680 g of methyl methacrylate and 120 g of perfluorohexylethyl methacrylate were used instead of 760 g of methyl methacrylate and 40 g of perfluorohexylethyl methacrylate.

(2) Preparation of Resin Blend and Molded Article Using the Same

10 parts by weight of the second resin obtained above was blended with 90 parts by weight of the first resin, and then a sample having a thickness of 3200 $\mu$m was prepared by the same method as described in Example 1.

(3) Measurement of Physical Properties of Sample

As the results of measurement of the physical properties of the obtained sample, it was shown that a thickness of the second resin layer was 120 $\mu$m, a thickness of an interface layer was 40 $\mu$m, a difference in surface energy was 14.5 mN/m, a difference in melt viscosity was 310 pa*s, a difference in solubility parameter was 0.5 $(J/cm^3)^{1/2}$, a weight average molecular weight of the second resin obtained by GPC was 100K, and a molecular weight distribution thereof was 2.1. In addition, an angle of contact was 86 degrees, a pencil hardness was 2.5H, and layer separation occurred. In evaluation of contamination resistance, a number of repetitions of the test performed until a mark was no longer removed was 50.

### Example 5

(1) Preparation of Second Resin

A second resin was obtained by the same method as described in Example 1, except that 520 g of methyl methacrylate, 240 g of 3-ethyl-3-methacryloyloxymethyloxetane and 40 g of perfluorohexylethyl methacrylate were used instead of 760 g of methyl methacrylate and 40 g of perfluorohexylethyl methacrylate.

(2) Preparation of Resin Blend and Molded Article Using the Same

10 parts by weight of the second resin obtained above was blended with 90 parts by weight of the first resin, and then a sample having a thickness of 3200 $\mu$m was prepared by the same method as described in Example 1.

(3) Measurement of Physical Properties of Sample

As the results of measurement of the physical properties of the obtained sample, it was shown that a thickness of the second resin layer was 125 $\mu$m, a thickness of an interface layer was 10 $\mu$m, a difference in surface energy was 15.1 mN/m, a difference in melt viscosity was 290 pa*s, a difference in solubility parameter was 0.6 $(J/cm^3)^{1/2}$, a weight average molecular weight of the second resin obtained by GPC was 100K, and a molecular weight distribution thereof was 2.1. In addition, an angle of contact was 88 degrees, a pencil hardness was 2H, and layer separation occurred. In evaluation of contamination resistance, a number of repetitions of the test performed until a mark was no longer removed was 62.

## Example 6

(1) Preparation of Second Resin

A second resin was obtained by the same method as described in Example 1, except that 560 g of methyl methacrylate, 200 g of cyclohexyl methacrylate and 40 g of perfluorohexylethyl methacrylate were used instead of 760 g of methyl methacrylate and 40 g of perfluorohexylethyl methacrylate.

(2) Preparation of Resin Blend and Molded Article Using the Same

10 parts by weight of the second resin obtained above was blended with 90 parts by weight of the first resin, and then a sample having a thickness of 3200 $\mu$m was prepared by the same method as described in Example 1.

(3) Measurement of Physical Properties of Sample

As the results of measurement of the physical properties of the obtained sample, it was shown that a thickness of the second resin layer was 10 $\mu$m, a thickness of an interface layer was 22 $\mu$m, a difference in surface energy was 7.4 mN/m, a difference in melt viscosity was 410 pa*s, a difference in solubility parameter was 0.6 $(J/cm^3)^{1/2}$, a weight average molecular weight of the second resin obtained by GPC was 100K, and a molecular weight distribution thereof was 2. In addition, an angle of contact was 84 degrees, a pencil hardness was 2H, and layer separation occurred. In evaluation of contamination resistance, a number of repetitions of the test performed until a mark was no longer removed was 30.

## Example 7

(1) Preparation of Second Resin

A second resin was obtained by the same method as described in Example 1, except that 380 g of methyl methacrylate, 380 g of cyclohexyl methacrylate and 40 g of perfluorohexylethyl methacrylate were used instead of 760 g of methyl methacrylate and 40 g of perfluorohexylethyl methacrylate.

(2) Preparation of Resin Blend and Molded Article Using the Same

10 parts by weight of the second resin obtained above was blended with 90 parts by weight of the first resin, and then a sample having a thickness of 3200 $\mu$m was prepared by the same method as described in Example 1.

(3) Measurement of Physical Properties of Sample

As the results of measurement of the physical properties of the obtained sample, it was shown that a thickness of the second resin layer was 45 $\mu$m, a thickness of an interface layer was 10 $\mu$m, a difference in surface energy was 5.5 mN/m, a difference in melt viscosity was 450 pa*s, a difference in solubility parameter was 0.8 $(J/cm^3)^{12}$, a weight average molecular weight of the second resin obtained by GPC was 100K, and a molecular weight distribution thereof was 2. In addition, an angle of contact was 83 degrees, a pencil hardness was 2.5H, and layer separation occurred. In evaluation of contamination resistance, a number of repetitions of the test performed until a mark was no longer removed was 35.

**Comparative Example 1**

(1) Preparation of Second Resin

A second resin was obtained by the same method as described in Example 1, except that 560 g of methyl methacrylate and 240 g of 3-ethyl-3-methacryloyloxymethyloxetane were used instead of 760 g of methyl methacrylate and 40 g of perfluorohexylethyl methacrylate.

(2) Preparation of Resin Blend and Molded Article Using the Same

10 parts by weight of the second resin obtained above was blended with 90 parts by weight of the first resin, and then a sample was prepared by the same method as described in Example 1.

(3) Measurement of Physical Properties of Sample

As the results of measurement of the physical properties of the obtained sample, it was shown that a thickness of the second resin layer was 80 $\mu$m, a thickness of an interface layer was 30 $\mu$m, a difference in surface energy was 1 mN/m, a difference in melt viscosity was 280 pa*s, a difference in solubility parameter was 0.5 $(J/cm^3)^{1/2}$, a weight average molecular weight of the second resin obtained by GPC was 100K, and a molecular weight distribution thereof was 2. In addition, an angle of contact was 68 degrees, a pencil hardness was 2H, and layer separation occurred. In evaluation of contamination resistance, a mark was not completely removed in the first test.

**Comparative Example 2**

(1) Preparation of Second Resin

A second resin was obtained by the same method as described in Example 1, except that 560 g of methyl methacrylate and 240 g of 3-cylcohexyl methacrylate were used instead of 760 g of methyl methacrylate and 40 g of perfluorohexylethyl methacrylate.

(2) Preparation of Resin Blend and Molded Article Using the Same

10 parts by weight of the second resin obtained above was blended with 90 parts by weight of the first resin, and then a sample was prepared by the same method as described in Example 1.

(3) Measurement of Physical Properties of Sample

As the results of measurement of the physical properties of the obtained sample, it was shown that a thickness of the second resin layer was 76 $\mu$m, a thickness of an interface layer was 23 $\mu$m, a difference in surface energy was 1.4 mN/m, a difference in melt viscosity was 410 pa*s, a difference in solubility parameter was 0.6 $(J/cm^3)^{1/2}$, a weight average molecular weight of the second resin obtained by GPC was 100K, and a molecular weight distribution thereof was 1.9. In addition, an angle of contact was 74 degrees, a pencil hardness was 2H, and layer separation occurred. In evaluation of contamination resistance, a mark was not completely removed in the first test.

**Comparative Example 3**

100 parts by weight of a pellet of a first resin was dried in an oven and injected using an EC100Φ30 injector (ENGEL) at 240 °C, thereby obtaining a sample.
As the results of measurement of the physical properties of the obtained sample, a surface energy was 43 mN/m, an angle of contact was 69 degrees, and a pencil hardness was F. In evaluation of contamination resistance, a mark was not completely removed in the first test.

**Comparative Example 4**

(1) Preparation of Second Resin

A second resin was obtained by the same method as described in Example 1, except that 1.6 g of n-dodecyl mercaptan as a chain transfer agent and 0.9 g of azobis-(2,4-dimethyl)-valeronitrile as an initiator were used instead of 2.4 g of n-dodecyl mercaptan and 2.4 g of azobis-(2,4-dimethyl)-valeronitrile.

(2) Preparation of Resin Blend and Molded Article Using the Same

10 parts by weight of the second resin obtained above was blended with 90 parts by weight of the first resin, and then a sample was prepared by the same method as described in Example 1.

(3) Measurement of Physical Properties of Sample

As the results of measurement of the physical properties of the obtained sample, it was shown that a difference in surface energy was 4 mN/m, a difference in melt viscosity was 400 pa*s, a difference in solubility parameter was 0.5 $(J/cm^3)^{1/2}$, a weight average molecular weight of the second resin obtained by GPC was 100K, and a molecular weight distribution thereof was 3.2. In addition, an angle of contact was 72 degrees, a pencil hardness was 0.5H, and layer separation did not occur. In evaluation of contamination resistance, a number of repetitions of the test performed until a mark was no longer removed was 3.

**Comparative Example 5**

A hard coating layer was formed on the sample of Comparative Example 3 by forming a layer by coating an anti-contamination hard coating solution (including multi-functional polyacrylate) prepared by the inventor (17.5 wt% DPHA, 10 wt% PETA, 1.5 wt% perfluorohexylethyl methacrylate, 5 wt% urethane acrylate EB 1290 from SK cytech, 45 wt% methyl ethyl ketone, 20 wt% isopropyl alcohol and 1 wt% IRGACURE 184 as a UV initiator from Ciba) using a Mayer bar #9, drying the coating at 60 to 90 °C for 4 minutes to form a coating film, and curing the coating film by UV irradiation with an intensity of 3000 mJ/cm$^2$.

A pencil hardness of the hard coating layer was 3H, and in evaluation of the contamination resistance, a number of repetitions of the test until a pen was no longer removed was 50. In addition, average values and standard variations of peak intensity ratios $[I_{BD}(C=C) / I_A(C=O)]$ and $[I_{BD}(\text{out-of-plane}) / I_A(C=O)]$ detected by an IR spectrometer were 0, respectively.

According to the present invention, the resin blend can improve mechanical and surface characteristics of a resin article and realize excellent contamination resistance. Further, since additional coating is not required for manufacturing a resin article, a manufacturing time and/or cost can be reduced, and productivity can be increased.

**Claims**

1. Use of a resin blend, comprising:

   a first resin, wherein the first resin includes at least one selected from the group consisting of a styrene-based resin, a polyolefin-based resin, a thermoplastic elastomer, a polyoxyalkylene-based resin, a polyester-based resin, a polyvinyl chloride-based resin, a polycarbonate-based resin, a polyphenylene sulfide-based resin, a vinyl alcohol-based resin, an acrylate-based resin, and a copolymer thereof, and
   a second resin comprising a resin to which a fluorine or fluorine-substituted organic functional group is introduced and having a difference in surface energy from the first resin at 25 °C of 0.1 to 35 mN/m,
   wherein the fluorine-substituted organic functional group comprises at least one selected from the group consisting of a fluorine-substituted alkyl group having 1 to 30 carbon atoms and a fluorine-substituted hydroxyalkyl group having 1 to 30 carbon atoms for forming a layer separation structure during a melting process under shear stress.

2. Use of the resin blend according to claim 1, wherein a difference in melt viscosity between the first resin and the second resin is 0.1 to 3000 pa*s at a shear rate of 100 to 1000s$^{-1}$ and a processing temperature of the resin blend.

3. Use of the resin blend according to claim 1, wherein a difference in solubility parameter between the first resin and the second resin at 25 °C is 0.001 to 10.0 $(J/cm^3)^{1/2}$.

4. Use of the resin blend according to claim 1, wherein the second resin has a molecular weight distribution of 1 to 2.5.

5. Use of the resin blend according to claim 1, wherein the second resin has a weight average molecular weight of 30,000 to 200,000.

6. Use of the resin blend according to claim 1, wherein the resin included in the second resin includes at least one selected from the group consisting of a (meth)acrylate-based resin, an epoxy-based resin, an oxetane-based resin, an isocyanate-based resin, a silicon-based resin and a copolymer thereof.

**Patentansprüche**

1. Verwendung einer Harzmischung, umfassend:

   ein erstes Harz, wobei das erste Harz wenigstens eines einschließt, ausgewählt aus der Gruppe bestehend aus einem Harz auf Styrolbasis, einem Harz auf Polyolefinbasis, einem thermoplastischen Elastomer, einem Harz auf Polyoxyalkylenbasis, einem Harz auf Polyesterbasis, einem Harz auf Polyvinylchloridbasis, einem Harz auf Polycarbonatbasis, einem Harz auf Polyphenylensulfidbasis, einem Harz auf Vinylalkoholbasis, einem Harz auf Acrylatbasis und einem Copolymer derselben, und
   ein zweites Harz umfassend ein Harz, in das eine funktionelle Fluor- oder Fluor-substituierte organische Gruppe eingeführt ist, und mit einem Unterschied in der Oberflächenenergie zum ersten Harz bei 25°C von 0,1 bis 35 mN/m,
   wobei die funktionelle Fluor-substituierte organische Gruppe wenigstens eine umfasst, ausgewählt aus der Gruppe bestehend aus einer Fluor-substituierten Alkylgruppe mit 1 bis 30 Kohlenstoffatomen und einer Fluor-substituierten Hydroxyalkylgruppe mit 1 bis 30 Kohlenstoffatomen zum Bilden einer Schichttrennstruktur während einer Schmelzverarbeitung unter Scherspannung.

2. Verwendung der Harzmischung nach Anspruch 1, wobei ein Unterschied in der Schmelzviskosität zwischen dem ersten Harz und dem zweiten Harz 0,1 bis 3000 pa*s bei einer Scherrate von 100 bis 1000s$^{-1}$ und einer Verarbeitungstemperatur der Harzmischung ist.

3. Verwendung der Harzmischung nach Anspruch 1, wobei ein Unterschied in dem Löslichkeitsparameter zwischen dem ersten Harz und dem zweiten Harz bei 25°C 0,001 bis 10,0 $(J/cm^3)^{1/2}$ ist.

4. Verwendung der Harzmischung nach Anspruch 1, wobei das zweite Harz eine Molekulargewichtsverteilung von 1 bis 2,5 aufweist.

5. Verwendung der Harzmischung nach Anspruch 1, wobei das zweite Harz ein Gewichtsmittelmolekulargewicht von 30.000 bis 200.000 aufweist.

6. Verwendung der Harzmischung nach Anspruch 1, wobei das in dem zweiten Harz eingeschlossene Harz wenigstens eines einschließt, ausgewählt aus der Gruppe bestehend aus einem Harz auf (Meth)acrylatbasis, einem Harz auf Epoxybasis, einem Harz auf Oxetanbasis, einem Harz auf Isocyanatbasis, einem Harz auf Siliziumbasis und einem Copolymer derselben.

**Revendications**

1. Utilisation d'un mélange de résines, comprenant :

   une première résine, dans laquelle la première résine inclut au moins une résine sélectionnée dans le groupe comprenant une résine à base de styrène, une résine à base de polyoléfine, un élastomère thermoplastique, une résine à base de polyoxyalkylène, une résine à base de polyester, une résine à base de polychlorure de vinyle, une résine à base de polycarbonate, une résine à base de polysulfure de phénylène, une résine à base d'alcool vinylique, une résine à base d'acrylate, et un copolymère qui en résulte, et
   une seconde résine comprenant une résine à laquelle un groupe fonctionnel organique fluoré ou substitué par du fluor est introduit et ayant une différence en énergie de surface de la première résine à 25 °C comprise entre 0,1 et 35 mN/m,
   dans laquelle le groupe fonctionnel organique substitué par du fluor comprend au moins un groupe sélectionné dans le groupe comprenant un groupe alkyle substitué par du fluor ayant entre 1 et 30 atomes de carbone et un groupe hydroxyalkyle substitué par du fluor ayant entre 1 et 30 atomes de carbone pour former une structure de séparation en couche pendant un procédé de fusion sous contrainte de cisaillement.

2. Utilisation du mélange de résines selon la revendication 1, dans laquelle une différence de viscosité à l'état fondu entre la première résine et la seconde résine est comprise entre 0,1 et 3 000 pa*s à une vitesse de cisaillement comprise entre 100 et 1000 s$^{-1}$ et une température de traitement du mélange de résine.

3. Utilisation du mélange de résines selon la revendication 1, dans lequel une différence de paramètre de solubilité entre la première résine et la seconde résine à 25 °C est comprise entre 0,001 et 10,0 (J/cm$^3$)$^{1/2}$.

4. Utilisation du mélange de résines selon la revendication 1, dans lequel la seconde résine a une distribution de poids moléculaire entre 1 et 2,5.

5. Utilisation du mélange de résines selon la revendication 1, dans lequel la seconde résine a un poids moléculaire moyen compris entre 30 000 et 200 000.

6. Utilisation du mélange de résines selon la revendication 1, dans lequel la résine incluse dans la seconde résine comporte au moins une résine sélectionnée dans le groupe omprenant une résine à base méthacrylate, une résine à base d'époxy, une résine à base d'oxétane, une résine à base d'isocyanate, une résine à base de silicone et un copolymère qui en résulte.

[FIG. 1]

[FIG. 2]

<Surface>
<Second resin layer>
<Interface layer>
<First resin layer>

**EP 2 578 639 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003198769 A1

**Non-patent literature cited in the description**

- *Macromolecular Materials and Engineering,* vol. 291, 1307-1314
- *Advanced Functional Materials,* vol. 17, 2739-2745
- *International Polymer Processing,* vol. 21 (2), 168-174
- *Chemistry and Materials Science, Rheologica Acta,* vol. 47 (4), 469-476
- **BICERANO, J.** Prediction of Polymer Properties. Marcel Dekker Inc, 2002